# EUROPEAN PATENT APPLICATION

(11) **EP 4 269 267 A2**
(43) Date of publication of application: **01.11.2023**
(21) Application number: 23168886.2
(22) Date of filing: 20.04.2023
(51) Int. Cl.: B65D 5/56, B65D 5/74

(54) **PACKAGING BLANK, METHOD FOR MOLDING A LID-SPOUT ASSEMBLY ONTO A PACKAGING BLANK, LID SPOUT ASSEMBLY, PACKAGE HAVING A LID-SPOUT ASSEMBLY AND METHOD AND APPARATUS FOR FORMING A PACKAGING BLANK**

(30) Priority: 29.04.2022 EP 22170892
(71) Applicant: Tetra Laval Holdings & Finance S.A., 1009 Pully (CH)
(72) Inventor: MARTINI, Pietro, 41123 Modena (IT); BERTANI, Giulio, 41123 Modena (IT); GOLFIERI, Daniele, 41123 Modena (IT)
(74) Representative: Tetra Pak - Patent Attorneys SE

(57) **Abstract**

There is described a packaging blank (5) having a multilayer structure for forming a package (2) comprising a fibrous base layer (7), a layer of gas-barrier material (9), a plurality of layers of heat-seal plastic material (8), a hole (15) configured to allow the molding of a lid-spout assembly (4) about the hole (15) and a separation membrane (16) covering the hole (15) and comprising a layer of gas-barrier material. The separation membrane (16) comprises one or more weakening lines (17) defining a plurality of covering portions (18).

## Description

### TECHNICAL FIELD

The present invention relates to a packaging blank for forming a package having a multilayer structure, in particular for forming a package having a lid-spout assembly.

Advantageously, the present invention also relates to a method for molding a lid-spout assembly onto a packaging blank, in particular a packaging blank for forming a package.

Advantageously, the present invention also relates to a lid-spout assembly, in particular a lid-spout assembly molded onto a packaging blank.

Advantageously, the present invention also relates to a package for a pourable product, in particular a pourable food product.

Moreover, the present invention also relates to a method for forming a packaging blank.

Furthermore, the present invention relates to an apparatus for forming a packaging blank.

### BACKGROUND ART

As is known, many liquid or pourable food products, such as fruit juice, UHT (ultra-high-temperature treated) milk, wine, tomato sauce, etc., are sold in packages made of sterilized packaging material.

A typical example is the parallelepiped-shaped package for liquid or pourable food products known as Tetra Brik Aseptic (registered trademark), which is made by sealing and folding a laminated packaging material. The packaging material has a multilayer structure comprising a fibrous base layer, e.g. of paper or cardboard, covered on both sides with layers of heat-seal plastic material, e.g. polyethylene. In the case of aseptic packages for long-storage products, such as UHT milk, the packaging material also comprises a layer of oxygen-barrier material (an oxygen-barrier layer), e.g. an aluminum foil, which is superimposed on a layer of heat-seal plastic material, and is in turn covered with another layer of heat-seal plastic material forming the inner face of the package eventually contacting the food product.

Packages of this sort are normally produced on fully automatic packaging apparatuses, which advance and sterilize a web of packaging material, which is then formed into a tube and filled with the pourable product before its formation into individual sealed packages.

It is known that some types of packages also comprise lid-spout assemblies, which allow to be manipulated for accessing the pourable product.

In order to provide the packages with the lid-spout assemblies, the automatic packaging apparatuses also comprise a molding apparatus for molding the lid-spout assemblies onto the web of packaging material.

A typical molding apparatus comprises a plurality of molding tools, each molding tool is couplable to one respective repeat unit of the web of packaging material at a time and is configured to mold the lid-spout assembly about a respective through-hole of the respective repeat unit, the respective through-hole defining a pouring opening of the finalized package.

Finally, the packages are formed from the web of packaging material carrying the lid-spout assemblies molded onto the respective repeat units.

Even though the so obtained packages present excellent operation results, a desire is felt in the sector to further improve the known packages having lid-spout assemblies.

### DISCLOSURE OF INVENTION

It is therefore an object of the present invention to provide in a straightforward and low-cost manner an improved packaging blank, in particular a packaging blank which allows the formation of improved packages provided with respective lid-spout assemblies.

It is a further object of the present invention to provide in a straightforward and low-cost manner an improved method for molding a lid-spout assembly onto a packaging blank, in particular a packaging blank which can then be formed into a package.

It is another object of the present invention to provide in a straightforward and low-cost manner an improved lid-spout assembly, in particular an improved lid-spout assembly having improved gas-barrier properties.

It is another object of the present invention to provide in a straightforward and low-cost manner an improved package for a pourable product, in particular a pourable food product.

It is a further object of the present invention to provide in a straightforward and low-cost manner an improved method for forming a packaging blank.

It is another object of the present invention to provide in a straightforward and low-cost manner an improved apparatus for forming an improved packaging blank.

According to the present invention, there is provided a packaging blank as claimed in claim 1.

Preferred non-limiting embodiments of the packaging blank are claimed in the respective dependent claims.

According to the present invention, there is also provided a method for molding a lid-spout assembly onto a packaging blank according to claim 7.

Preferred non-limiting embodiments of the method for molding are claimed in the respective dependent claims.

According to the present invention there is also provided a lid-spout assembly according to claim 11.

According to the present invention there is also provided a package according to claim 12.

According to the present invention there is also provided a method for forming a packaging blank according to claims 13 or 14.

According to the present invention there is also provided an apparatus for forming a packaging blank according to claim 15.

### BRIEF DESCRIPTION OF THE DRAWINGS

A non-limiting embodiment of the present invention will be described by way of example with reference to the accompanying drawings, in which:
Figure 1 is a schematic view of a packaging machine for forming packages having lid-spout assemblies, with parts removed for clarity;
Figure 2 is a schematic view of a portion of a packaging blank of the present invention, with parts removed for clarity;
Figure 3 is a schematic section view of a detail of the packaging blank according to Figure 2;
Figure 4 is a schematic view of a molding tool interacting with a portion of the packaging blank of Figure 2, with parts removed for clarity;
Figure 5 is a schematic and simplified view of a detail of the molding process for molding a lid-spout assembly, with parts removed for clarity;
Figure 6 is a schematic section view of a lid-spout assembly according to the present invention, with parts removed for clarity;
Figure 7 is a top view of a packaging blank of the present invention; and
Figure 8 is a top view of a portion of the packaging blank of Figure 7.

### BEST MODES FOR CARRYING OUT THE INVENTION

Number 1 indicates as a whole a packaging machine for producing (sealed) packages 2 of a pourable product, in particular a pourable food product such as pasteurized milk, fruit juice, wine, tomato sauce, etc., each packaging 2 having at least a main body 3 and one respective lid-spout assembly 4 fixed onto main body 3.

In particular, packaging machine 1 produces packages 2, in particular the respective main bodies 3, from respective packaging blanks 5. In particular, packaging blanks 5 are successively arranged one after the other in the form of a web of packaging material 6.

More specifically, each packaging blank 5 may define a respective repeat unit of web of packaging material 6. In other words, web of packaging material 6 may comprise a plurality of repeat units/packaging blanks 5, in particular successively arranged (and equally spaced) with respect to one another along web of packaging material 6. Even more specifically, each repeat unit/packaging blank 5 is intended to form one respective package 2, in particular the respective main body 3. In other words, packaging machine 1 is configured to produce packages 2 from web of packaging material 6 such that each package 2, in particular the respective main body 3, results from one respective repeat unit/packaging blank 5.

In particular, each repeat unit/packaging blank 5 may be defined by one respective pattern present on web of packaging material 6. Even more particular, the pattern is substantially identical for all repeat units and may also differ in minor details from the other ones, minor differences may e.g. be the presence of information tags indicating a production day, a production lot, personalized information or similar.

Additionally and as will be explained in more detail further below, each lid-spout assembly 4 may be molded onto the respective packaging blank 5. Then, in use, during the formation of packages 2, in particular main bodies 3, the respective lid-spout assemblies 4 are fixed onto the respective main bodies 3.

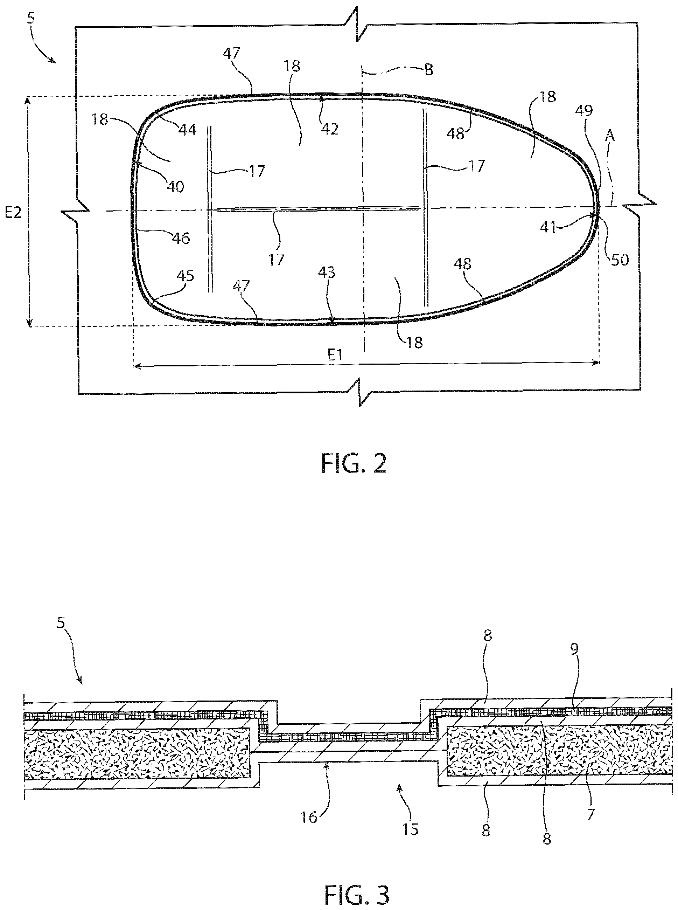

With reference to Figure 3, each packaging blank 5 has a multilayer structure and comprises at least a fibrous base layer 7 (i.e. a layer of fibrous material), such as e.g. a paper or cardboard layer, and at least two layers of heat-seal plastic material 8, e.g. polyethylene, interposing the layer of fibrous material 7 in between one another. One of these two layers of heat-seal plastic 8 material defines an inner face of the respective package 2, in particular the respective main body 3, eventually contacting the pourable product.

Each packaging blank 5 may also comprise a layer of gas- barrier material 9, e.g. aluminum foil or ethylene vinyl alcohol (EVOH) film, in particular being arranged between one of the layers of the heat-seal plastic material 8 and the layer of fibrous material 7. Preferentially, each packaging blank 5 may also comprise a further layer of heat-seal plastic material 8 being interposed between the layer of gas-barrier material 9 and the layer of fibrous material 7.

In more detail, layer of gas-barrier material 9 may define a barrier for a gas, in particular oxygen. In particular, layer of gas-barrier material 9 may allow to maintain a determined quality of the pourable food product for an enhanced time.

Preferentially, layer of gas-barrier material 9 may also be configured to act as a light-barrier material.

Each packaging blank 5 may also comprise a first face and a second face, in particular the first face being the face of packaging blank 5 forming the inner face of the formed package 2, in particular the respective main body 3, eventually contacting the filled pourable food product.

Furthermore, each packaging blank 5 may comprise a hole 15, in particular configured to allow for the molding of the respective lid-spout assembly 4 about hole 15.

Preferentially, at least a portion of each hole 15 may define a respective pouring opening of the respective package 2 formed from the respective packaging blank 3, in particular for allowing for an out-pouring of the pourable product from the respective main body 3.

Additionally and with particular reference to Figures 2 and 3, each packaging blank 5 comprises a separation membrane 16 covering the respective hole 15 and comprising a layer of gas-barrier material.

Additionally, separation membrane 16 comprises one or more weakening lines 17, in the example shown three, defining a plurality of covering portions 18.

As will be explained in more detail further below, the presence of the one or more weakening lines 17 allows that the respective covering portions 18 are attached, in particular fused, to specific portions of the respective lid-spout assembly 4. Thereby, one improves the gas-barrier properties of the respective lid-spout assembly 4.

With particular reference to Figure 3, each separation membrane 16 may also comprise one or more layers of heat-seal material. In particular, each separation membrane 16 may comprise two layers of heat-seal material interposing the layer of gas-barrier material between one another.

More specifically, each separation membrane 16 may be defined by a respective portion of layer of gas-barrier material 9, and in particular of respective portions of one or more layers of heat-seal plastic material 8.

Additionally, each hole 15 may be defined by a through-hole within fibrous base layer 7. Such a through-hole may e.g. be obtained by a punching process of a blank of a fibrous base layer lacking any hole 15 and/or through-hole. Moreover, the blank of a fibrous base layer may be laminated after the punching process so as to obtain the respective packaging blank 5; in particular, during the lamination process, hole 15 will be covered by the layers of heat-seal plastic material 8 so defining the respective separation membrane 16.

With particular reference to Figures 2, 7 and 8, each hole 15 may extend within a plane being defined by a longitudinal axis A and a transversal axis B orthogonal to longitudinal axis A.

Moreover, an imaginary longitudinal line parallel to longitudinal axis A and an imaginary transversal line parallel to transversal axis B intersect at a respective point, in particular a center point, of hole 15. In Figures 2, 7 and 8, only longitudinal axis A and transversal axis B are shown. However, the respective imaginary longitudinal line and the respective imaginary transversal line are substantially coaxial to the drawn longitudinal axis A and the drawn transversal axis B.

Each hole 15 may have a first extension, in particular a first maximum extension E1, along the imaginary longitudinal line. Additionally, each hole 15 may have a second extension, in particular a second maximum extension E2, along the imaginary transversal line.

Preferentially, the respective first maximum extension E1 of each hole 15 may be larger than the respective second maximum extension E2. In other words, each hole 15 may be longer than wider.

According to some preferred embodiments, each first maximum extension E1 may range between 20 mm and 28 mm, in particular 20 mm to 25 mm.

The Applicant has observed that such a size is advantageous with regard to the possibility of improving also the respective lid-spout assembly 4 arranged about the respective hole 15.

According to some preferred non-limiting embodiments, a ratio between each first maximum extension E1 and the respective second maximum extension E2 may range between 1,0 and 2,8, in particular between 1,0 and 2,5.

Preferentially, each second maximum extension E2 may range between 10 mm and 20 mm.

Each hole 15 may be symmetric with respect to the respective imaginary longitudinal line. In other words, a respective symmetry axis corresponds to the respective imaginary longitudinal line. With reference to Figures 2, 7 and 8, the respective symmetry axis corresponds to the drawn longitudinal axis A.

According to some preferred non-limiting embodiments, each hole 15 may comprise only one respective symmetry axis, namely the one corresponding to the respective imaginary longitudinal line.

Additionally, each hole 15 may have an asymmetric shape with respect to the respective imaginary transversal line.

With particular reference to Figures 2, 7 and 8, each hole 15 may be delimited by and/or may comprise a first lateral edge 40, a second lateral edge 41, a first longitudinal edge 42 and a second longitudinal edge 43.

In particular, first lateral edge 40, second lateral edge 41, first longitudinal edge 42 and second longitudinal edge 43 may define an annular rim of hole 15.

Preferentially, first lateral edge 40 and second lateral edge 41 may be spaced apart from one another, in particular along a direction parallel to longitudinal axis A. Moreover, first longitudinal edge 42 and second longitudinal edge 43 may be spaced apart from one another, in particular along a direction parallel to transversal axis B.

Additionally, each one of first lateral edge 40 and second lateral edge 41 may contact first longitudinal edge 42 and second longitudinal edge 43.

Preferentially, first longitudinal edge 42 and second longitudinal edge 43 may extend along a direction being (substantially) parallel to longitudinal axis A.

Additionally, respective extensions of first longitudinal edge 42 and of second longitudinal edge 43 are larger than respective extensions of first lateral edge 40 and second lateral edge 41.

More specifically, the respective extension of first lateral edge 40 is larger than the respective extension of second lateral edge 41.

The respective extensions, and in particular also the respective shapes, of first longitudinal edge 42 and of second longitudinal edge 43 equal one another.

In further detail, each first lateral edge 40 may comprise a first connecting portion 44 being connected to first longitudinal edge 42 and a second connecting portion 45 being connected to second longitudinal edge 43.

Preferentially, each first connecting portion 44 and each second connecting portion 45 may be curved.

Moreover, a respective radius of curvature of each first connecting portion 44 and/or of each second connecting portion 45 may range between 3,75 mm and 5 mm, in particular it may range between 3, 9 mm and 4, 3 mm, even more particular it may equal 4 mm.

According to some preferred non-limiting embodiments, each first connecting portion 44 and/or each second connecting portion 45 may be outwards convex.

According to some preferred non-limiting embodiments, each first transversal edge 40 may comprise a linear portion 46.

In further detail, each first longitudinal edge 42 and each second longitudinal edge 43 may be curved.

Additionally, each first longitudinal edge 42 and each second longitudinal edge 43 may comprise a respective first section 47 and a respective second section 48. In particular, each first section 47 may be connected to the respective first transversal edge 40 and each second section 48 may be connected to the respective second transversal edge 41.

Preferentially, a respective radius of curvature of each first section 47 may range between 200 mm and 280 mm.

Alternatively or in addition, a respective radius of curvature of each second section 48 may range between 18 mm and 22 mm.

Furthermore, each second lateral edge 41 may comprise a respective third connecting portion 49 being connected to first longitudinal edge 41 and a fourth connecting portion 50 being connected to second longitudinal edge 42.

In particular, each third connecting portion 49 and each fourth connecting portion 50 may be connected to the respective second section 48.

More specifically, each third connecting portion 49 and each fourth connecting portion 50 may be curved.

Preferentially, a respective radius of curvature of each third connecting portion 49 and/or of each fourth connecting portion 50 may range between 3,5 mm and 5 mm, in particular the respective radius of curvature may range between 3,8 mm and 4,5 mm, even more particular the respective radius of curvature may equal 4,0 mm.

Moreover, each third connecting portion 49 and/or each fourth connecting portion 50 may be outwards convex.

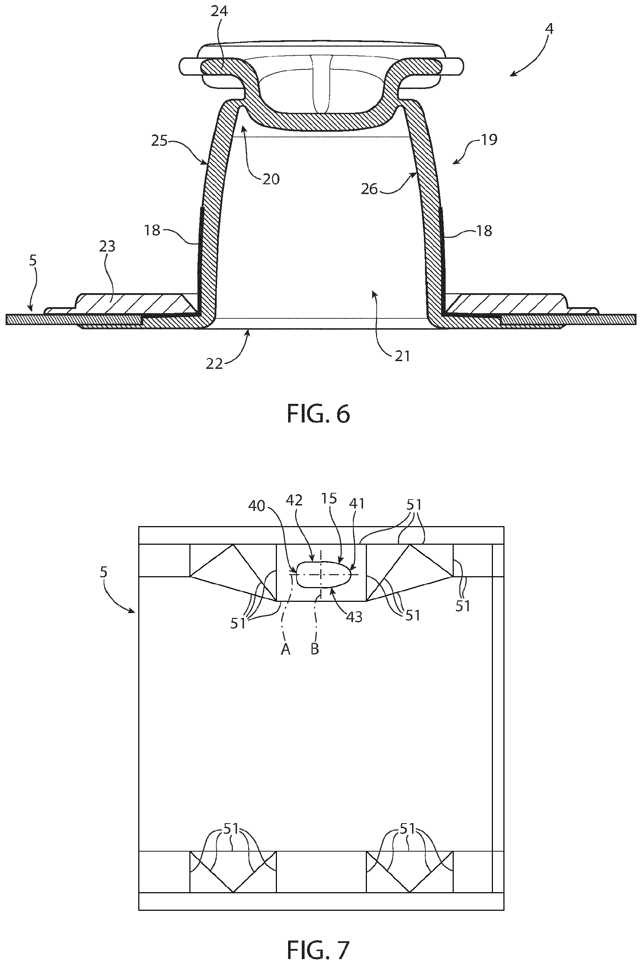

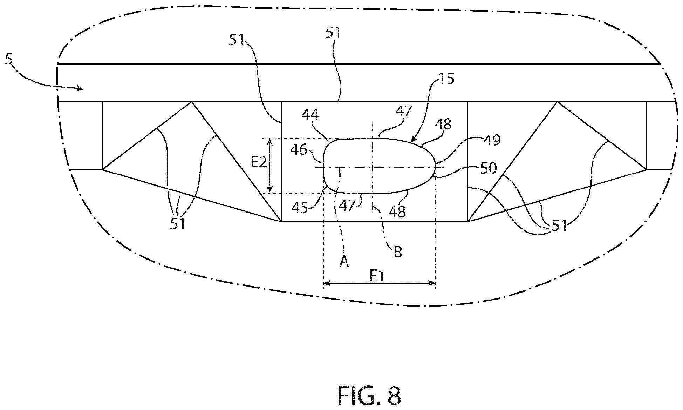

With particular reference to Figures 7 and 8, each packaging blank 5 may also comprise a plurality of crease lines 51 along which, in use, packaging blank 5 is folded (in order to define the shape of the respective main body 3) .

Preferentially but not necessarily, each hole 15 may be arranged in an area delimited by two crease lines 51 parallel to the respective longitudinal axis A and two crease lines 51 parallel to the respective transversal axis B. In particular, there are no further crease lines arranged within the respective area of each hole 15.

According to some preferred non-limiting embodiments, at least one weakening line 17 may extend substantially parallel, in particular parallel, to and/or along the respective first axis A.

In the specific example shown, each separation membrane 16 may comprise more than one weakening line 17.

However, each separation membrane 16 may comprise only one weakening line 17, which preferentially may extend substantially parallel, in particular parallel, to and/or along the respective first axis A.

Preferentially, each weakening line 17 may have a (substantially) linear shape.

With reference to Figure 2, each separation membrane 16 may comprise one weakening line 17 (not shown in Figures 7 and 8 to make the other features of hole 15 clearer) extending between and being transversal, in particular perpendicular, to two further weakening lines 17. In particular, the further weakening lines 17 may be spaced apart from one another along the respective first axis A. According to such a non-limiting embodiment, each separation membrane 16 may comprise four covering portions 18.

According to some possible non-limiting embodiments, each covering portion 18 may be axially moveable about a respective hinge axis C.

According to some possible non-limiting embodiments, each weakening line 17 may be defined by a perforation or an incision or an ablation or a cut.

In other words, each weakening line 17 may be formed by operation of cutting knives or a perforation tool or an ablation tool.

Preferentially, each lid-spout assembly 4 may be configured to allow to access and/or to outpour, in particular after a manipulation of lid-spout assembly 4, the pourable food product packaged within the respective package 2. In particular, the manipulation of the lid-spout assembly 4 can be reversible or irreversible.

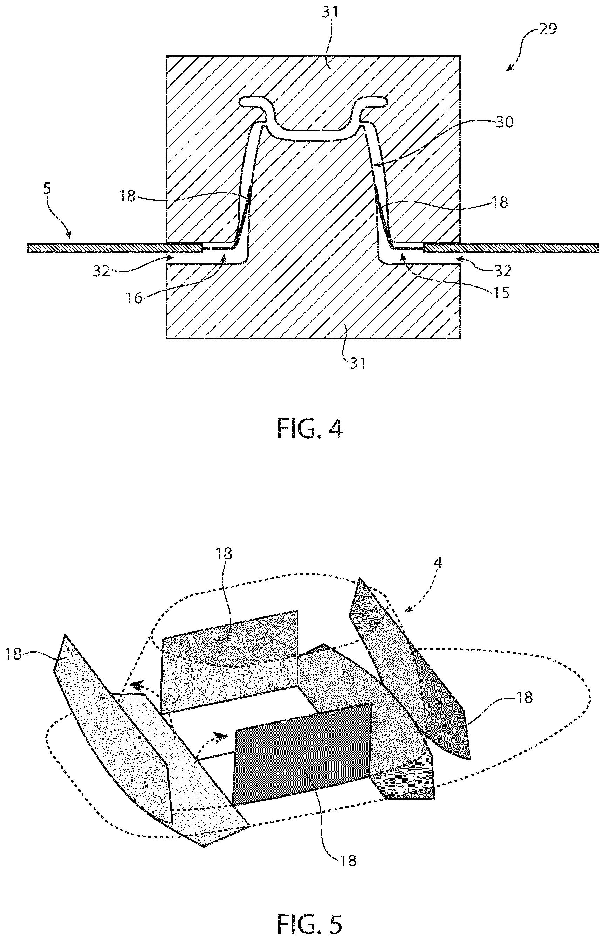

In more detail and with particular reference to Figures 5 and 6, each lid-spout assembly 4 comprises a collar 19 having a pouring outlet 20 (covered in Figure 6 by a portion of lid-spout assembly 4). In particular, pouring outlet 20 may be aligned with respect to the respective hole 15, even more particular to superimpose at least a portion of the respective hole 15.

Each collar 19 may comprise and/or delimit a flow channel 21 configured to allow for a flow of the pourable food product within flow channel 21 itself. Flow channel 21 may extend between an inlet opening 22 of collar 19 and the respective pouring outlet 20.

Additionally, each lid-spout assembly 4 may comprise a base frame 23 connecting the respective lid-spout assembly 4 to the respective packaging blank 5 and about the respective hole 15. In particular, the respective collar 19 protrudes from the respective base frame 23.

In particular, each base frame 23 may be formed such to cover the respective hole 15 and may comprise an aperture aligned with pouring outlet 20 and inlet opening 22.

According to some preferred non-limiting embodiments, an extension of each inlet opening 22 and/or each pouring outlet 20 may be smaller than an extension of the respective hole 15. In other words, each inlet opening 22 and/or each pouring outlet 20 may cover only a portion of hole 15. Furthermore, the other portions of hole 15 not being covered by inlet opening 22 and/or each pouring outlet 20 may be covered by base frame 23.

Preferentially, each lid-spout assembly 4 may also comprise a lid element 24 configured to cover the respective pouring outlet 20.

According to some preferred non-limiting embodiments, each collar 19 and/or each pouring outlet 20 and/or each inlet opening 22 may extend along a respective third axis, in particular parallel to the respective first axis A, and a respective fourth axis, in particular parallel to the respective second axis B. Preferentially, each third axis is (substantially) perpendicular to the respective fourth axis.

Moreover, a third extension of each collar 19 and/or each pouring outlet 20 and/or each inlet opening 22 along the respective third axis may be larger than a fourth extension of each collar 19 and/or each pouring outlet 20 and/or each inlet opening 22 along the respective fourth axis.

In alternative or in addition, each collar 19 and/or each pouring outlet 20 and/or each inlet opening 22 may be symmetric with respect to the respective third axis, and preferentially may be non-symmetric with respect to the respective fourth axis. In other words, each collar 19 and/or each pouring outlet 20 and/or each inlet opening 22 has only one symmetry axis.

In further detail, each collar 19 may comprise an outer surface 25, in particular facing away from the respective flow channel 21. Preferentially, each collar 19 may also comprise an inner surface 26 opposite to outer surface 25, and in particular facing the respective flow channel 21.

Advantageously, each covering portion 18 may be configured to move during molding of the respective lid-spout assembly 4 such to cover a respective portion of the respective outer surface 25.

In particular, the presence of at least one weakening line 17, and preferentially also the interaction with tools (see further below) used during molding of lid-spout assembly 4, allows a controlled movement of the covering portions 18.

Accordingly (see Figures 5 and 6), each lid-spout assembly 4 comprises collar 19, in particular respective outer surface 25, which is at least partially covered by a layer of gas-barrier material. In other words, each lid-spout assembly 4 comprises collar 19, in particular respective outer surface 25, which comprises a layer of gas-barrier material.

In further detail, during molding of lid-spout assembly 4, each covering portion 18 may angularly move about the respective hinge axis C such to cover the respective portion of the respective outer surface 25.

With particular reference to Figure 4, molding of each lid-spout assembly 4 about the respective hole 15 may be obtained by means of a molding tool 29, which comprises a respective molding cavity 30. In particular, a shape of the respective molding cavity 30 may define the shape of the respective lid-spout assembly 4.

In even more detail, each molding tool 29 may comprise a plurality of mold portions 31, which may define in cooperation with one another molding cavity 30 and which may execute a relative movement for opening or closing the respective molding tool 29.

More specifically, at least one mold portion 31 may be configured to move, in use, covering portions 18 such that during insertion of a molten polymer into molding cavity 30 covering portions 18 are fused to the respective portions of outer surface 25.

Alternatively or in addition, movement of covering portions 18 is driven by the flow of molten polymer.

The presence of the one or more weakening lines 17 allows to correctly position covering portions 18 in the molding cavity 30 and therefore to obtain the controlled fusion of covering portions 18 onto the respective portions of outer surface 25.

Molding tool 29 may also comprise an injection point 32 through which the molten polymer enters into molding cavity 30. Preferentially, injection point 32 may be laterally displaced with respect to a central axis of the respective collar 19 of the respective lid-spout assembly 4 formed during molding of lid-spout assembly 4 and/or of molding cavity 30.

In particular, injection point 32 is chosen such that, in use, the molten polymer flows such that covering portions 18 can fuse onto outer surface 25. In particular, the flow of the molten polymer is such that covering portions 18 are moved radially away from the respective central axis.

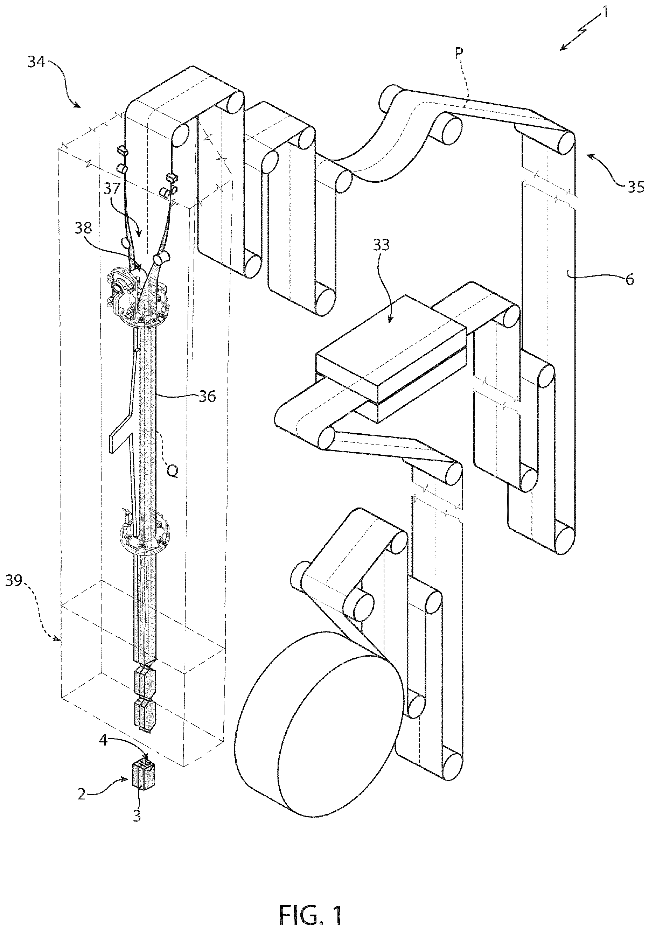

With particular reference to Figure 1, packaging machine 1 comprises at least:
- a molding apparatus 33 configured to mold lid-spout assemblies 4 onto packaging blank 5; and
- a package forming apparatus 34 for forming packages 2 from packaging blanks 5, in particular from web of packaging material 6, and to fill packages 2 with the pourable food product.

More specifically, molding apparatus 33 may comprise one or more molding tools 29 for molding lid-spout assemblies 4 onto respective packaging blanks 5. In particular, molding apparatus 33 may be configured such that molding apparatus 33 molds more than one lid-spout assembly 4 at a time, each lid-spout assembly 4 being molded onto the respective packaging blanks 5.

It should be noted that according to some possible embodiments, packaging machine 1 may be supplied with packaging blanks 5, in particular the respective web of packaging material 6.

According to such possible embodiments, packaging blanks 5, in particular the respective web of packaging material 6 may be produced within a converting apparatus distinct from packaging machine 1. In particular, the converting apparatus may define a packaging blank forming apparatus.

Such a converting apparatus may comprise:
- an advancement device for advancing base package blanks, in particular in the form of a web, comprising a fibrous base layer, a layer of gas-barrier material, a plurality of layers of heat-seal plastic material, a hole 15 configured to allow the molding of one lid-spout assembly 4 about the hole 15 and a separation membrane 16 covering hole 15 and comprising at least a layer of gas-barrier material;
- a weakening line forming tool, in particular a punching tool, configured to form one or more weakening lines 17 on separation membranes 16.

Preferentially, the weakening line forming tool, in particular the punching tool, may comprise cutting knives or a perforation tool.

In particular, each base package blank is (substantially) identical to the respective packaging blank 5 with the difference of lacking the respective one or more weakening lines 17.

The converting apparatus may also comprise means for forming the base package blanks.

Advantageously, the converting apparatus may also be present within a plant distinct and arranged at a different location from a production plant within which packaging machine 1 is installed.

According to some alternative embodiments, packaging machine 1 may comprise a packaging blank forming apparatus for forming packaging blanks 5 from the respective base package blanks. In particular, the packaging blank forming apparatus comprises the advancement device and the weakening line forming tool.

According to such an embodiment, the base package blanks are provided to packaging machine 1 and packaging machine 1 may form the one or more weakening lines 17 by operation of the packaging blank forming apparatus.

In further detail, packaging forming apparatus 34 may be configured to form and fill packages 2 after molding of lid-spout assemblies 4 onto packaging blanks 5.

Preferentially, package forming apparatus 34 may comprise at least:
- a conveying device 35 configured to advance web of packaging material 6 along a web advancement path P at least to a tube forming station at which web of packaging material 6 is formed, in use, into a tube 36; conveying device 35 may also be configured to advance tube 36 along a tube advancement path Q; and
- a tube forming and sealing device 37 configured to form tube 36 from web of packaging material 6 and to longitudinally seal tube 36 at the tube forming station;
- a filling device 38 configured to fill tube 36 with the pourable product; and
- a package forming unit 39 configured to form and transversally seal and cut tube 36 for obtaining (sealed) packages 2.

In particular, molding apparatus 33 may be arranged upstream of tube forming and sealing device 37 along web advancement path P.

Advantageously, conveying device 35 may be configured to advance web packaging material 6 within molding apparatus 33 intermittently. In particular, when web of packaging material 6 is stopped molding apparatus 33 may mold the respective lid-spout assemblies 4 onto the respective packaging blanks 5 and when web of packaging material 6 is advanced the respective packaging blanks 5, which have received their respective lid-spout assemblies 4, may be moved away from molding apparatus 33 and new packaging blanks 5 may be placed within molding apparatus 33.

In use, packaging machine 1 produces packages 2 of a pourable product, each package 2 having one respective main body 3 and one respective lid-spout assembly 4.

In particular, packages 2, in particular the respective main bodies 3, are obtained by forming and filling the respective packaging blanks 5. Prior to the formation of packages 2, the respective lid-spout assemblies 4 may be molded about the respective holes 15 of the respective packaging blanks 5.

In more detail, molding of each lid-spout assembly may comprise the steps of:
- providing the respective packaging blank 5;
- closing molding tool 29 around packaging blank 5 such that hole 15 is received within molding cavity 30; and
- injecting the molten polymer into molding cavity 30 for molding lid-spout assembly 4 about the respective hole 15 such that the respective covering portions 18 are fused onto the respective outer surface 25.

In more detail, during the step of providing the respective packaging blank 5, a sub-step of feeding may be executed during which the respective packaging blank 5 is fed to molding apparatus 33 and a sub-step of discharging is executed during which the respective packaging blank 5 together with the respective lid-spout assembly 4 is discharged from molding apparatus 33.

According to some possible embodiments, the step of providing may also comprise the sub-steps of:
- supplying the respective base package blank comprising the respective fibrous base layer 7, the respective layer of gas-barrier material 9, the respective plurality of layers of heat-seal plastic material 8, the respective hole 15 and the respective separation membrane 16; and
- forming one or more weakening lines 17 on the respective separation membrane 16 for obtaining the respective packaging blank 5.

In particular, the sub-step of supplying and the sub-step of forming are executed prior to the sub-step of feeding and the sub-step of discharging.

In even further detail, during the sub-step of forming, the one or more weakening lines 17 may be formed by operation of the weakening line forming tool, in particular cutting knives or a perforation tool or an ablation tool.

Additionally, the sub-step of forming and the sub-step of supplying may be executed by the packaging blank forming apparatus.

According to some possible embodiments, during the step of closing, the respective molding tool 29 is closed. In particular, the respective mold portions 31 are approached to one another so as to form and close the respective molding cavity 30. Even more particular, during approaching of the respective mold portions 31 towards one another at least one of the mold portions 31 moves the respective covering portions 18, preferentially so as to align the respective covering portions 18 within the respective molding cavity 30.

Additionally, during the step of injecting, the flow of molten polymer, in particular introduced through the respective injection point 32, moves, in particular radially moves, covering portions 18, in particular away from the respective central axis.

Furthermore, molding of each lid-spout assembly 4 may comprise the step of withdrawing, during which the respective molding tool 29 is withdrawn from the respective packaging blank 5. In particular, the respective molding tool 29 is opened by moving away the molding portions 31 from one another.

According to some possible embodiments, formation of packaging blanks 5 may occur within packaging machine 1 according to the sub-step of supplying and the sub-step of forming, in particular by operation of the packaging blank forming apparatus.

Alternatively, the sub-step of supplying and the sub-step of forming may be part of a converting method, in particular within the converting apparatus.

Moreover, according to such an embodiment, prior to the sub-step of supplying and the sub-step of forming, the base package blank may be produced within the converting apparatus.

In more detail, the converting method may also comprise the steps of:
- providing a base blank comprising the respective fibrous base layer;
- creating the respective hole 15, in particular by punching the base blank; and
- laminating, during which the respective layers of heat-seal plastic material 8 and the layer of gas-barrier material 9 are laminated onto the base blank having the respective hole 15 to obtain the base package blank.

In particular, during the step of laminating, the respective separation membrane 16 may be obtained by those portions of the respective one or more layers of heat-seal plastic material 8 and of the at least one layer of gas-barrier material 9 being arranged at the respective hole 15.

The advantages of packaging blank 5 and/or lid-spout assembly 4 and/or packages 2 and/or the methods and/or the apparatus according to the present invention will be clear from the foregoing description.

In particular, it is possible to obtain improved packages 2 since portions of collar 19 are covered by covering portions 18. This allows to improve the gas-barrier properties of lid-spout assembly 4. This again allows to guarantee that the quality of the pourable product remains at desired levels for an increased time.

Clearly, changes may be made to packaging blank 5 and/or lid-spout assembly 4 and/or packages 2 and/or the methods and/or the apparatus as described herein without, however, departing from the scope of protection as defined in the accompanying claims.

## Claims

1. Packaging blank (5) having a multilayer structure for forming a package (2) comprising:
- a fibrous base layer (7);
- a layer of gas-barrier material (9);
- a plurality of layers of heat-seal plastic material (8) ;
- a hole (15) configured to allow the molding of a lid-spout assembly (4) about the hole (15); and
- a separation membrane (16) covering the hole (15) and comprising a layer of gas-barrier material;
wherein the separation membrane (16) comprises one or more weakening lines (17) defining a plurality of covering portions (18).

2. Packaging blank according to claim 1, wherein the hole (15) extends within a plane being defined by a longitudinal axis (A) and a transversal axis (B) orthogonal to the longitudinal axis (A);
wherein an imaginary longitudinal line parallel to the first longitudinal axis (A) and an imaginary transversal line parallel to the transversal axis (B) intersect at a respective center point of the hole (15);
wherein the hole (15) is symmetric with respect to the imaginary longitudinal line and/or a first extension of the hole (15) along the imaginary longitudinal line is larger than a second extension of the hole (15) along the imaginary transversal line;
wherein the at least one weakening line (17) extends substantially parallel to and/or along the imaginary longitudinal line.

3. Packaging blank according to claim 1 or 2, wherein a first weakening line (17) extends between and is transversal, in particular perpendicular, to a second weakening line (17) and a third weakening line (17).

4. Packaging blank according to any one of the preceding claims, wherein each covering portion (18) is configured to move during molding of the respective lid-spout assembly (4) and such to cover a respective portion of an outer surface (20) of a collar (19) of the molded lid-spout assembly (4).

5. Packaging blank according to any one of the preceding claims, wherein each weakening line (17) has a substantially linear shape.

6. Packaging blank according to any one of the preceding claims, wherein each weakening line (17) is defined by a perforation or an incision or an ablation or a cut.

7. Method for molding a lid-spout assembly (4) onto a packaging blank (5);
wherein the packaging blank (5) comprises a fibrous base layer (7), a layer of gas-barrier material (9), a plurality of layers of heat-seal plastic material (8), a hole (15) configured to allow the molding of a lid-spout assembly (4) about the hole (15) and a separation membrane (16) covering the hole (15) and comprising a layer of gas-barrier material and one or more weakening lines (17) defining a plurality of covering portions (18);
the method comprises the steps of:
- providing the packaging blank (5);
- closing around the packaging blank (5) a molding tool (29) having a molding cavity (30) such that the hole (15) is received within the molding cavity (30); and
- injecting a molten polymer into the molding cavity (30) for molding a lid-spout assembly (4) about the hole (15) and such that the covering portions (18) are fused onto an outer surface (20) of a collar (19) of the lid-spout assembly (4).

8. Method according to claim 7, wherein during the step of providing, the following sub-steps are executed:
- supplying a base package blank comprising a base layer, a layer of gas-barrier material, a plurality of layers of heat-seal plastic material, a hole (15) configured to allow the molding of a lid-spout assembly (4) about the hole (15) and a separation membrane (16) covering the hole (15) and comprising at least a layer of gas-barrier material;
- forming one or more weakening lines (17) on the separation membrane (16) for obtaining the packaging blank (5) .

9. Method according to claim 8, wherein during the sub-step of forming, the one or more weakening lines (17) are formed by operation of cutting knives or a perforation tool or an ablation tool.

10. Method according to any one of claims 7 to 9, wherein the molding tool (29) comprises an injection point (32) through which the molten polymer enters into the molding cavity (30);
wherein the injection point (32) is laterally displaced with respect to a central axis of a collar (19) of the lid-spout assembly (4) formed during the step of molding.

11. Lid-spout assembly (4) comprising a collar (19) having a pouring outlet (20) and a layer of gas-barrier material fused to an outer surface (25) of the collar (19) .

12. Package for a pourable product comprising a main body (3) formed from a multilayer packaging blank (5) according to any one of claims 1 to 6 and a lid-spout assembly (4) according to claim 11 connected to the main body (3).

13. Method, in particular a converting method, for producing a packaging blank (5);
wherein the packaging blank (5) comprises a fibrous base layer (7), a layer of gas-barrier material (9), a plurality of layers of heat-seal plastic material (8), a hole (15) configured to allow the molding of a lid-spout assembly (4) about the hole (15); wherein the packaging blank (5) comprises a separation membrane (16) covering the hole (15) and comprising a layer of gas-barrier material; wherein the separation membrane (16) comprises one or more weakening lines (17) defining a plurality of covering portions (18);
wherein the method comprises the steps of:
- providing a base blank comprising a fibrous base layer;
- creating a hole (15) configured to allow the molding of a lid-spout assembly (4) about the hole (15) within the base blank;
- laminating, during which the respective plurality of layers of heat-seal plastic material (8) and the layer of gas-barrier material (9) are laminated onto the base blank having the respective hole (15); and
- forming the one or more weakening lines (17) on the separation membrane (16) for obtaining the packaging blank (5).

14. Method according to claim 13, wherein during the step of forming, a punching tool comprising cutting knives, or a perforation tool is approached onto the separation membrane (16).

15. Apparatus, in particular a converting apparatus, for forming a packaging blank (5);
wherein the packaging blank (5) comprises a fibrous base layer (7), a layer of gas-barrier material (9), a plurality of layers of heat-seal plastic material (8), a hole (15) configured to allow the molding of a lid-spout assembly (4) about the hole (15); wherein the packaging blank comprises (5) a separation membrane (16) covering the hole (15) and comprising a layer of gas-barrier material; wherein the separation membrane (16) comprises one or more weakening lines (17) defining a plurality of covering portions (18);
the apparatus comprises:
- an advancement device for advancing base package blanks comprising a base layer, a layer of gas-barrier material, a plurality of heat-seal plastic material, a hole (15) configured to allow the molding of one lid-spout assembly (4) about the hole (15) and a separation membrane covering the hole (15) and comprising at least a layer of gas-barrier material;
- a weakening line forming tool, in particular a punching tool, configured to form the one or more weakening lines (17) on the separation membrane (16).
